# EUROPÄISCHE PATENTANMELDUNG

(11) **EP 1 054 342 A2**
(43) Veröffentlichungstag der Anmeldung: **22.11.2000**
(21) Anmeldenummer: 00109944.9
(22) Anmeldetag: 11.05.2000
(51) Int. Cl.: G06K 13/08

(54) **Vorrichtung und Verfahren zur Halterung von Karten an einem Gerätegehäuse**

(30) Priorität: 19.05.1999 DE 19922976
(71) Anmelder: ROBERT BOSCH GMBH, 70442 Stuttgart (DE)
(72) Erfinder: Kynast, Andreas, 31139 Hildesheim (DE)

(57) **Zusammenfassung**

Die Erfindung bezieht sich auf ein Vorrichtung zur Halterung von Karten an einem Gerätegehäuse, mit Führungsmitteln und Kontaktelementen für die zu haltenden Karten. Gemäß der Erfindung werden die Karten (12) in Führungselementen (2, 3, 6) an einer Außenseite (1.1) des Gehäuses (1) gehalten.

## Beschreibung

### Technisches Gebiet:

Die Erfindung bezieht sich auf eine Vorrichtung und ein Verfahren zur Halterung von Karten an einem Gehäuse von Geräten wie beispielsweise Mobiltelefone, Notebooks, Hand PC's (Palmtops), die der ständigen Miniaturisierung unterworfen sind.

### Stand der Technik:

Aus dem Stand der Technik sind Lesevorrichtungen für Chipkarten unterschiedlicher äußerer Abmessungen bekannt. Mittels eines versenkbaren, federnd gelagerten Führungsrahmens, der am Kartenschacht des Gerätes vorgesehen ist, und mittels zweier Schalter erkennt eine Schaltlogik, welches Kartenformat gerade verwendet wird. Mittels eines außerhalb des Bereiches einer Chipkartenfläche liegenden Schalters wird die Endposition der Chipkarte detektiert; ein in dem versenkbaren Führungsrahmen vorgesehener Stößel wird bei Verwendung eines anderen Kartenformates aus seiner Ruheposition bewegt und betätigt ebenfalls den Schalter. Mittels dieser aus dem Stand der Technik bekannten Vorrichtung lassen sich in einem Kartenschacht Karten unterschiedlicher Formate einführen, wobei die Verdrehung eines Kartenformats notwendig ist, um die gleichen Anschlußpunkte zu realisieren wie das andere Kartenformat. Bei dieser Konfiguration aus dem Stand der Technik ist innerhalb des Geräts ein Kartenschacht erforderlich, um entweder das eine oder das andere zu verwendende Kartenformat aufzunehmen.

Der Entwicklungstrend im Bereich technischer Endgeräte verläuft dahingehend, daß im Zuge der Miniaturisierung die Abmessungen der Endgeräte immer kleiner werden, wobei gleichzeitig die Funktionalität der Endgeräte, wie beispielsweise Mobiltelefone, Hand PC's, Notebooks oder dergleichen immer weiter steigt. Dadurch ergeben sich immer größer werdende Schwierigkeiten, Platz für einsteckbare Karten an den Endgeräten vorzusehen. Selbst wenn die Einsteckkarten nur selten genutzt werden, muß bisher trotzdem ein Luftquader für einen benötigten Kartenschacht vorgesehen werden.

### Darstellung der Erfindung:

Der Vorteil der erfindungsgemäßen Lösung ist vor allem darin zu sehen, daß innerhalb der Endgeräte erheblich Platz eingespart werden kann, da nunmehr keine Kartenschächte für die Karten vorzusehen sind. Durch die Anordnung der bewegbaren Führungselemente an der Außenseite des Gehäuses steht das gesamte Gehäuseinnere zur Aufnahme und Anordnung von Schaltkreisen und elektronischen Bauelementen zur Verfügung. Werden die Karten an der Außenseite des Gehäuses gehalten, gestaltet sich die Abfuhr der beim Betrieb der Karten entstehende Wärme an die Umgebung wesentlich einfacher durch natürliche Konvektion und Wärmestrahlung. Bei den bisher erforderlichen Kartenschächten konnte die entstehende Wärme nur m unzureichender Wärme abgeführt werden. Bei den Karten kann es sich um Chipkarten, PCMCIA-, GSM-, oder SIM-Karten oder andere bekannte Kartenarten handeln.

In vorteilhafter Weise lassen sich die bei der erfindungsgemäßen Lösung vorgesehenen Führungselemente von einer eingefahrenen in eine ausgefahrene Position bewegen. Die Führungselemente werden nur dann aktiviert, wenn sie tatsächlich zum Halten einer Karte erforderlich sind, während der Kartenschacht auch bei Nichtbenutzung immer im Endgerät verbleibt. In eingefahrenem Zustand fluchten die Führungselemente für das Halten von Karten mit den Außenabmessungen des Gehäuses des Endgerätes und beeinträchtigen dessen ästhetische Erscheinung nur unmerklich. Während als seitliche Schlitten dienende Führungselemente manuell in ihre ausgefahrene Position ausziehbar sein können, ist ein mittiger als Führungselement der Karten dienender Schlitten federbelastet durch einfachen Fingerdruck aus dem Gehäuse des Gerätes ausfahrbar und wieder in dieses nach Entfernung der Karte einfahrbar.

Die Führungselemente sind miteinander gegenüberliegenden Ausnehmungen versehen, die sich parallel zur Ober- und Unterseite des Endgerätes erstrecken und welche die Kanten der zu haltenden Karten umschließen. Lediglich die Hinterkante der Karte, an der ein Anschlußkabel befestigt ist, ist nicht von einer Ausnehmung eines Führungselementes umschlossen. Die Ausnehmungen können derart beschaffen sein, daß sie als Kontaktbahnen dienen, mit welchen die Daten der Karten an das jeweilig benutzte Endgerät übertragen werden können. Die Datenübertragung kann auch über außerhalb des Bereiches der Ausnehmungen angeordnete Kontakte erfolgen. Zur Erleichterung der Handhabung können die ein- und ausfahrbaren Führungselemente mit geriffelten Bereichen versehen sein. Die Ausnehmungen, die die Randbereiche der auszunehmenden Karten umschließen, können auch so angeordnet sein, daß diese in den Führungselementen etagenförmig übereinander liegen. So können in den Führungselementen mehrere Karten aufgenommen werden, was die Funktionalität der Endgeräte erheblich erweitern kann.

Als Endgeräte, bei denen eine erfindungsgemäße Vorrichtung vorgesehen werden kann, seien stellvertretend Mobiltelefone, Notebooks oder Laptops genannt. Weiter lassen sich Hand PC's oder auch Palmtops genannt oder PDA (Personal Digital Assistant), als Anwendungsbeispiele der erfindungsgemäßen Vorrichtung zur Halterung von Karten an einem Gerätegehäuse nennen.

Gemäß des erfindungsgemäßen Verfahrens zur Halterung von Karten an einem Gerätegehäuse werden die Karten in aus dem Gerätegehäuse ausfahrbaren Führungselementen an der Außenseite des Gerätegehäuses gehalten und von Führungselementen an mindestens zwei Seiten umschlossen. In, die Handhabung der erfindungsgemäßen Halterungsvorrichtung sehr vereinfachender Weise, sind die Führungselemente für die Karten derart miteinander gekoppelt, daß bei Betätigung eines Führungselements die restlichen Führungselemente gleichzeitig mit diesem aus dem Gerätegehäuse des Endgerätes ausfahren und ihre ausgefahrene Position einnehmen, was das Einschieben der Karte in die Ausnehmungen erheblich erleichtert, weil nicht jedes der Führungselemente einzeln betätigt werden muß.

### Zeichnung:

Anhand einer Zeichnung wird die Erfindung nachstehend näher erläutert.

Es zeigen:
- Figur 1: die Vorderansicht eines Gerätegehäuses mit eingefahrenen Führungselementen,
- Figur 2: die Seitenansicht mit in das Gerätegehäuse eingefahrenen schlittenförmigen Führungselementen,
- Figur 3: eine Draufsicht auf eine Seite des Endgeräts, wobei die eingefährenen Führungselemente mit den Außenabmessungen des Endgerätes fluchten,
- Figur 4: die Vorderansicht eines Endgerätes mit eingesteckter Karte,
- Figur 5: die Seitenansicht des Endgerätes mit ausgefahrenen Führungselementen sowie
- Figur 6: die Draufsicht auf ein Endgerät mit eingesteckter Karte, die an drei Seiten von den Ausnehmungen der Führungselemente umgriffen ist.

### Ausführungsbeispiel:

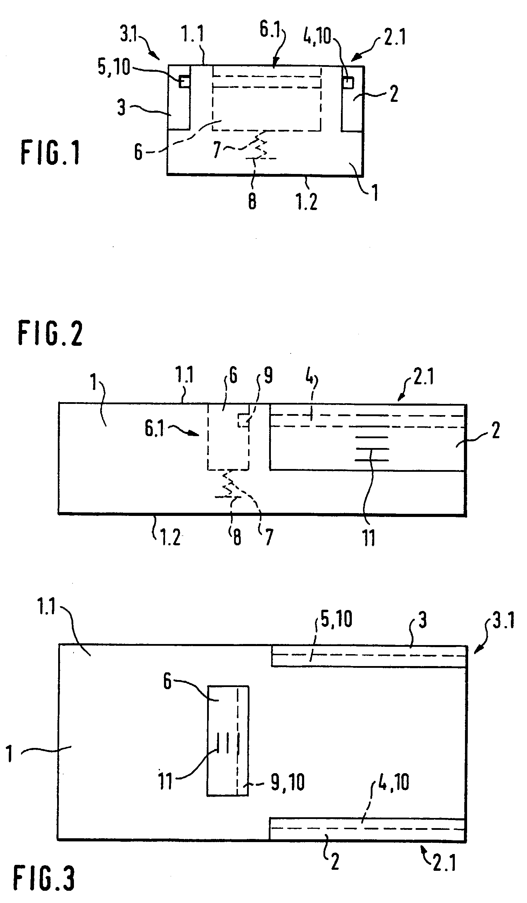

Figur 1 zeigt die Vorderansicht eines Gerätegehäuses mit eingefahrenen Führungselementen.

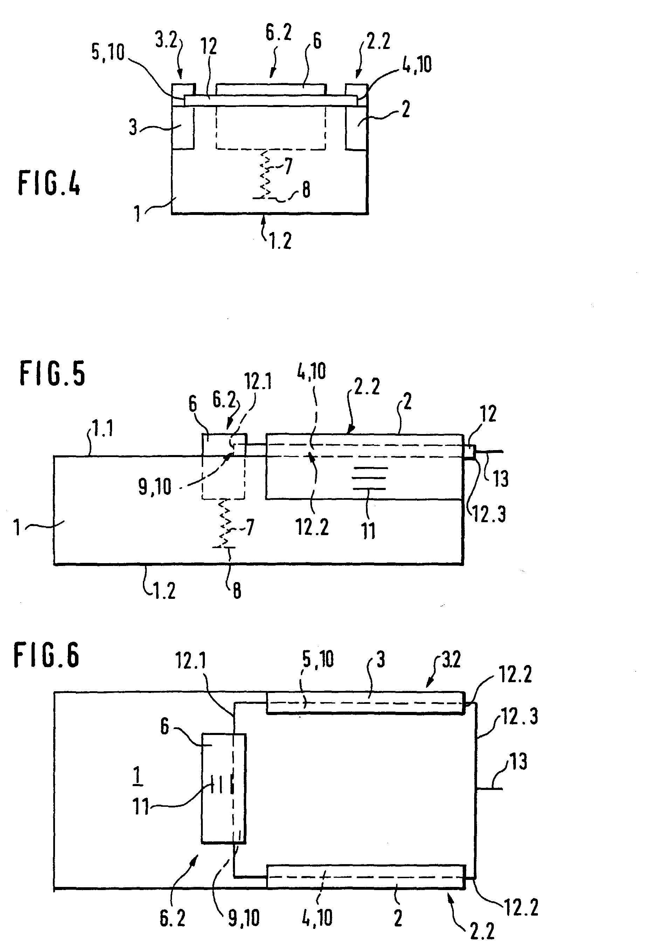

Das Gerätegehäuse 1 eines Mobiltelefons, eines Notebooks oder eines Hand PC's weist eine erste Seite 1.1 und eine zweite Seite 1.2 auf. An den Seitenflächen des Gerätegehäuses 1 sind Führungselemente 2, 3 in Gestalt eines ersten und zweiten seitlichen Schlittens angebracht, die ihrerseits mit sich zu den Seitenflächen des Gerätegehäuses 1 parallel erstreckenden Ausnehmungen 4, 5 versehen sind. Aus der gezeigten eingefahrenen Position 2.1 bzw. 3.1 lassen sich die Führungselemente 2, 3 manuell in eine ausgefahrene Position 2.2 bzw. 3.2 überführen, wie sie in Figur 4 dargestellt ist. In gestrichelter Wiedergabe ist in der Mitte des Gerätegehäuses 1 ein weiteres Führungselement 6 ausgeführt, als ein etwa mittig angeordneter Schlitten, in eingefahrener Position 6.1 gezeigt. Unterhalb des als Führungselement dienenden mittigen Schlittens 6 ist eine Feder 7 angeordnet, die aufgenommen auf einem Anschlag 8 das Ein- und Ausfahren des mittigen Schlittens 6 auf Fingerdruck bewirkt. In den als seitliches Führungselement dienenden seitlichen Schlitten 2, 3 und einen mittigen Schlitten 6 sind Ausnehmungen 4, 5 und 9 vorgesehen, die ihrerseits als Kontaktbahnen 10 zwischen eingesteckter Karte 12 und dem technischen Endgerät dienen können. Die Ausnehmungen 4, 5 und 9 in den Führungselementen 2, 3 und 6 sind in einer Ebene liegend angeordnet und halten eine in die Ausnehmungen 4, 5 und 9 eingeführte Karte 12 (Figuren 4-6) in einer Ebene relativ zur ersten Seite 1.1 des Gerätegehäuses 1.

Aus der Seitenansicht gemäß Figur 2 geht die Erstreckung der seitlichen Führungselemente 2, 3 am Gerätegehäuse 1 hervor. Die durch die Fläche des ersten seitlichen Schlittens 2 verdeckte Ausnehmung 4 ist in gestrichelter Darstellung wiedergegeben. Im gezeigten Ausführungsbeispiel sind am seitlichen ersten Schlitten 2 und am mittigen Schlitten 6 jeweils nur in einer Ebene liegende Ausnehmungen 4, 5 und 9 vorgesehen. Die Führungselemente 2, 3 und 6 könnten jedoch auch ohne weiteres einander in mehreren Ebenen gegenüberliegende Ausnehmungen haben, in welche dann mehrere Karten 12 in die Führungselemente 2, 3 und 6 einführbar sind, so daß in der erfindungsgemäßen Haltevorrichtung mehrere Karten am Gerätegehäuse 1 gleichzeitig aufnehmbar sind, ohne daß Kartenschächte am Gerätegehäuse 1 vorzusehen wären, was die Funktionalität eines technischen Endgerätes nicht unerheblich steigert. Die Führungselemente 2 und 6 sind jeweils in ihren in das Gerätegehäuse 1 eingefahrenen Positionen 2.1, 3. 1 und 6.1 gezeigt. Aus Figur 2 geht weiterhin hervor, daß die seitlichen Führungselemente 2, 3 mit einer Riffelung 11 versehen sein können, um die Handhabung der erfindungsgemäßen Haltevorrichtung zu erleichtern.

Die Draufsicht auf eine Oberseite des Gerätegehäuses des Endgerätes zeigt die in dieses eingefahrene Führungselement, die mit den Außenabmessungen des Endgerätes fluchten.

Die Oberseite des als mittiger Schliffen 6 angeordneten Führungselements ist ebenfalls mit einer Riffelung 11 versehen. Auf leichten Fingerdruck auf die Oberseite fährt das Führungselement 6, versehen mit einer Ausnehmung 9, aus dem Gerätegehäuse 1, unterstützt durch die Feder 7 aus. Die in ihren eingefahrenen Positionen dargestellten seitlichen ersten und zweiten Schliffen 2, 3 sind ebenfalls mit hier verdeckt liegenden Ausnehmungen 4, 5 versehen. Wie erwähnt können die Ausnehmungen 4, 5 und 9 an den Führungselementen 2, 3 und 6 auch als Kontaktbahnen 10 zwischen einzusteckender Karte 12 und Endgerät fungieren.

In Figur 4 ist die Vorderansicht des Gerätegehäuses mit eingesteckter Karte dargestellt.

Wie aus der Vorderansicht hervorgeht, sind die Führungselemente 2, 3 und 6 alle in ihre ausgefahrenen Positionen 2.2, 3.2 und 6.2 bewegt und umschließen die Seitenkanten einer Karte 12. Der als Führungselement 6 dienende mittige Schlitten ist, unterstützt durch die unter diesem angeordnete Feder 7, ebenfalls in die ausgefahrene Position 6.2 bewegt. Mittels der erfindungsgemäßen Haltevorrichtung wird die Karte 12 an zwei Längsseiten und an der Kopfseite umschlossen und kann an der ersten Seite 1.1 des Gerätegehäuses 1 außen anliegen.

Die Darstellung gemäß Figur 5 zeigt die Seitenansicht des Endgerätes mit ausgefahrenen Führungselementen.

Die Seitenkanten 12.2 der Karte 12 sind jeweils von den seitlichen Führungselementen 2, 3, von denen eines verdeckt ist, umschlossen. Die Längserstreckung der Karte 12 wird in seitlichen Führungselementen 2, 3 gehalten, die Karte 12 liegt mit ihrer Rückseite auf der ersten Seite 1.1 des Gerätegehäuses 1 auf. Sind die seitlichen Führungselemente 2, 3 in den Ausnehmungen 4, 5 nicht als Kontaktbahnen 10 gestaltet, so läßt sich eine Datenübertragung von der Karte 12 an das jeweilige technische Endgerät auch über Kontakte an der Gehäuserückseite 1.1 realisieren. Die Vorderkante 12.1 der Karte 12 ist von der Ausnehmung 9 an dem mittigen Schlitten 6 umschlossen, während die mit dem Anschlußkabel 13 versehene Hinterkante 12.3 der Karte 12 leicht über das Gerätegehäuse 1 übersteht. Es ist erkennbar, daß die ausgefahrenen Führungselemente 2, 3 und 6 in dieser Position sämtlich in einer Ebene liegen. Das Ausfahren der als Führungselemente dienenden Schlitten 2, 3 und 6 kann in vorteilhafter Weise derart erfolgen, daß die drei Führungselemente 2, 3 und 6 gleichzeitig aus dem Gerätegehäuse 1 ausfahren und somit alle drei die Karte 12 umschließenden Ausnehmungen 4, 5 und 9 gleichzeitig zur Aufrahme der Karte 12 zur Verfügung stehen.

Neben der in Figur 5 dargestellten Variante, in den Ausnehmungen 4, 5 und 9 eine Karte 12 zu halten, ist es auch möglich, mehrere jeweils in einer Ebene übereinander liegenden Ausnehmungen 4, 5 und 9 derart vorzusehen, daß mehrere Karten 12 an der Außenseite des Gerätegehäuses 1 gehalten werden. Die Führungselemente 2, 3 und 6 können dann mit Kontaktbahnen 10 versehen, auch als Datenübertragungsmittel dienen. Mittels einer zentralen Ein- und Ausfahrvorrichtung, mit der die Führungselemente 2, 3 und 6 gleichzeitig betätigbar sind, können sich diese dann jeweils in die Ausfahrpositionen 2.2, 3.2 und 6.2 bewegen, in der dann eine, zwei oder mehrere Karten in die schlitzförmig gestalteten Ausnehmungen 4, 5 und 9 eingeführt werden können. Die in Figur 5 gezeigte seitlich vorgesehene Riffelung 11 erleichtert das Ausziehen des seitlichen Schlittens 2 in die ausgefahrene Position 2.2.

In Figur 6 ist die Draufsicht auf ein Endgerät mit eingesteckter Karte dargestellt, die an drei Seiten von den Ausnehmungen der Führungselemente umgriffen ist.

Die am bzw. im Gerätegehäuse 1 aufgenommenen Führungselemente 2, 3und 6 umschließen in der ausgefahrenen Position 2.2, 3.2 und 6.2 jeweils die Seitenkanten 12.2 und die Vorderkante 12.1 der Karte 12. Die Karte 12 liegt somit flächig an der Seite 1.1 des Gerätegehäuses 1 an und die entstehende Wärme kann durch Konvektion und Wärmestrahlung ungehindert an die Umgebung abfließen, ohne daß sich das Gerätegehäuse 1 zu stark erwärmt. Die Führungselemente 2, 3 und 6 sind dabei derart angeordnet, daß bei einem Mobiltelefon-Gerätegehäuse 1 die erste Seite 1.1 die Gehäuseunterseite darstellt, während sich das Display und die Tastatur auf der zweiten Seite 1.2, im Falle eines Mobiltelefons, die Oberseite befindet. Die an der Außenseite 1.1 des Gerätegehäuses 1 gehaltene Karte 12 beeinträchtigt somit die Zugänglichkeit der Tastatur und die Einsehbarkeit des Displays nicht. Gleiches gilt für Notebooks und Hand PC's, bei denen sich die Karte 12, seien es PCMCIA, GSM, SIM oder andere Kartenarten, an der Geräteunterseite unterbringen lassen. Die Wärmeabgabe kann dabei ungehindert an die Umgebung erfolgen. Die Führungselemente 2, 3 und 6, die in ihren eingefahrenen Positionen 2.1, 3.1 und 6.1 mit den Außenabmessungen des Gerätegehäuses 1 fluchten, haben zudem den Vorteil, nur im Bedarfsfall hervorzutreten. Werden die technischen Endgeräte die Führungselemente 2, 3 und 6 selten genutzt, d.h. werden nur selten oder sporadisch Karten 12 eingesetzt, so werden die Führungselemente 2, 3 und 6 auch nur selten in ihre ausgefahrenen Positionen 2.2, 3.2 und 6.2 bewegt. Ein am Gerätegehäuse 1 hingegen vorgesehener Kartenschacht ist immer vorhanden, ganz gleich, ob in diesen eine Karte 12 aufgenommen wird oder nicht. Mittels der erfindungsgemäßen Lösung lassen sich diese Leerräume, die zudem nur sehr selten genutzte Räume am Endgerät sein können, vermeiden.

### Teileliste

- 1: Gerätegehäuse
- 1.1: erste Seite
- 1.2: zweite Seite
- 2: erster seitlicher Schlichten
- 2.1: eingefahrene Position
- 2.2: ausgefahrene Position
- 3: zweiter seitlicher Schlichten
- 3.1: eingefahrene Position
- 3.2: ausgefahrene Position
- 4: Ausnehmung
- 5: Ausnehmung
- 6: mittiger Schlitten
- 6.1: eingefahrene Position
- 6.2: ausgefahrene Position
- 7: Feder
- 8: Widerlager
- 9: Ausnehmung
- 10: Kontaktbahn
- 11: Riffelung
- 12: Karte
- 12.1: Vorderkante
- 12.2: Seitenkante
- 12.3: Hinterkante
- 13: Anschlußkabel

## Patentansprüche

1. Vorrichtung zur Halterung von Karten an einem Gerätegehäuse, mit Führungselementen für die zu haltenden Karten,
dadurch gekennzeichnet, daß
die Karten (12) in Führungselementen (2, 3, 6) an einer Außenseite (1.1) des Gehäuses (1) gehalten sind.

2. Vorrichtung gemäß Anspruch 1,
dadurch gekennzeichnet, daß
die Führungselemente (2, 3, 6) von einer eingefahrenen Position (2.1, 3.1, 6.1) in eine ausgefahrene Position (2.2, 3.2, 6.2) bewegbar sind.

3. Vorrichtung gemäß Anspruch 1,
dadurch gekennzeichnet, daß
die Führungselemente (2, 3, 6) in eingefahrener Position (2.1, 3.1, 6.1) mit der Außenseite des Gerätegehäuses (1) fluchten.

4. Vorrichtung gemäß Anspruch 1,
dadurch gekennzeichnet, daß
als Führungselemente ausgebildete seitliche Schlitten (2, 3) in ihre ausgefahrenen Positionen (2.2, 3.2) verschiebbar sind.

5. Vorrichtung gemäß Anspruch 1,
dadurch gekennzeichnet, daß
ein als Führungselement ausgebildeter mittiger Schliffen (6) federbelastet aus dem Gerätegehäuse (1) ein- und ausfahrbar ist.

6. Vorrichtung gemäß Anspruch 1,
dadurch gekennzeichnet, daß
die Führungselemente (2, 3, 6) mit einander gegenüberliegenden Ausnehmungen (4, 5, 9) ausgestattet sind.

7. Vorrichtung gemäß Anspruch 6,
dadurch gekennzeichnet, daß
die zu haltenden Karten (12) an mindestens zwei Seiten (12.1, 12.2) von den Ausnehmungen (4, 5, 9) umschlossen werden.

8. Vorrichtung gemäß Anspruch 6,
dadurch gekennzeichnet, daß
die Ausnehmungen (4, 5, 9) als Kontaktbahnen (10) zwischen den zu haltenden Karten (12) und dem Gerätegehäuse (1) des Endgerätes fungieren.

9. Vorrichtung gemäß Anspruch 6,
dadurch gekennzeichnet, daß
in ein- und ausfahrbaren Führungselementen (2, 3, 6) mehrere Ausnehmungen (4, 5, 9) zur Aufnahme mehrere Karten (12) eingebracht sind.

10. Vorrichtung gemäß Anspruch 1,
dadurch gekennzeichnet, daß
die Führungselemente (2, 3, 6) mit geriffelten Bereichen (11) zur besseren Handhabung versehen sind.

11. Mobiltelefon mit einer Halterungsvorrichtung für Karten an einem Gerätegehäuse, mit Führungs- und Kontaktelementen für die zu haltenden Karten,
dadurch gekennzeichnet, daß
die Karten (12) in Führungselementen (2, 3, 6) an einer Außenseite (1.1) des Gerätegehäuses (1) gehalten sind.

12. Notebook mit einer Halterungsvorrichtung für Karten an einem Gerätegehäuse, mit Führungs- und Kontaktelementen für die zu haltenden Karten,
dadurch gekennzeichnet, daß
die Karten (12) in Führungselementen (2, 3, 6) an einer Außenseite (1.1) des Gerätegehäuses (1) gehalten sind.

13. Hand PC (PDA) mit einer Halterungsvorrichtung für Karten an einem Gerätegehäuse, mit Führungs- und Kontaktelementen für die zu haltenden Karten,
dadurch gekennzeichnet, daß
die Karten (12) in Führungselementen (2, 3, 6) an einer Außenseite (1.1) des Gerätegehäuses (1) gehalten sind.

14. Verfahren zur Halterung von Karten an einem Gerätegehäuse (1), bei dem die Karten (12) in aus dem Gerätegehäuse (1) ausfahrbaren Führungselementen (2, 3, 6) an der Außenseite (1.1) des Gerätegehäuses (1) gehalten und von den Führungselementen (2, 3, 6) an mindestens zwei Seiten (12.1, 12.2) umschlossen sind.

15. Verfahren gemäß Anspruch 14,
dadurch gekennzeichnet, daß
die Führungselemente (2, 3, 6) gleichzeitig aus dem Gerätegehäuse (1) ausfahrbar sind.
